# EUROPEAN PATENT SPECIFICATION

(11) **EP 4 479 987 B1**
(45) Date of publication and mention of the grant of the patent: **09.07.2025**
(21) Application number: 23707996.7
(22) Date of filing: 17.02.2023
(51) Int. Cl.: G21C 7/12, G21C 7/117, G21C 3/326

(54) **INTEGRATED FUEL AND CONTROL SYSTEM**
INTEGRIERTES KRAFTSTOFF- UND STEUERUNGSSYSTEM
SYSTÈME INTÉGRÉ DE COMBUSTIBLE ET DE COMMANDE

(30) Priority: 22.02.2022 FI 20225158
(43) Date of publication of application: 25.12.2024
(73) Proprietor: Steady Energy Oy, 02100 Espoo (FI)
(72) Inventor: LEPPÄNEN, Jaakko, 02150 Espoo (FI); HOVI, Ville, 02150 Espoo (FI)
(74) Representative: Laine IP Oy
(86) International application number: PCT/FI2023/050099
(87) International publication number: WO 2023/161559

(56) References cited:
- US-A1- 2013 044 850
- US-A1- 2013 287 160
- US-A1- 2013 301 776
- US-A1- 2015 221 399
- US-A1- 2018 261 341
- US-B2- 11 120 919

## Description

### FIELD

The present disclosure relates to control drives for nuclear reactors. The present disclosure also relates to a method of reloading fuel assemblies in nuclear reactors.

### BACKGROUND

Nuclear fission reactors generate heat via a process of neutron chain reaction. The operating state of the reactor is adjusted by changing the neutron absorption rate in the reactor core. In general terms, this is referred to as reactivity control. One of the established methods for reactivity control is to use movable control rods containing neutron absorbing material, such as cadmium or boron. Inserting the control rods deeper into the reactor core increases, and withdrawing the rods reduces neutron absorption.

The conventional technical solution for control rod systems is to place the rod drive mechanisms (i.e. the electric motors that move the rods up and down) outside the reactor pressure vessel. In pressurized water reactors (PWRs) the rod drives are attached on the top lid of the vessel. Control rods of boiling water reactors (BWRs) are operated from below, with the drive shafts penetrating the vessel bottom.

In some reactor concepts the control rod drive mechanisms are placed inside the pressure vessel. One of the advantages of using in-vessel rod drives is that the possibility of fast control rod ejection transients is eliminated by design, due to the lack of pressure differential over the drive mechanism. This is not a common solution, however, since the operating conditions can be challenging for electric components. The operating temperature in conventional light water reactors is around 300 °C. PWRs operate at 12-15 MPa, and BWRs at around 7 MPa pressure, respectively.

In conventional PWRs core reactivity is in addition adjusted by changing the concentration of boric acid in the coolant water. This method, also known as boron shim, is in particular used for compensating the excess reactivity of fresh fuel assemblies placed in the reactor core at the beginning of each operating cycle. As the fuel is consumed, boron concentration is slowly reduced.

Some PWR concepts are designed to operate without soluble boron. The advantage of this approach is that the chemical and volume control system of the reactor is somewhat simplified, and reactivity transients related to boron dilution eliminated by design.

The drawback of boron-free operation is that reactivity control has to be managed by control rods alone, which complicates the core design. Further, maintaining the core in a sub-critical safe shut-down state during reloading operations becomes a technical challenge, since disassembling the core requires removing the control rod drives and associated structures before the fuel assemblies can be accessed. This is not an issue in conventional PWRs, in which the safe shut-down state is instead maintained by soluble boron, or in BWRs, in which control rods are inserted from below, and remain in place when the core is accessed from above.

In addition to reactivity control systems, the state of the reactor should be constantly monitored by various sensors and detectors that measure the relevant operating parameters, such as neutron flux and coolant temperature. In-core neutron detectors are placed in hollow instrumentation tubes that are part of the fuel assembly structure. Ex-core neutron detectors and temperature sensors are placed outside the core.

Nuclear reactors subject to boron-free operations are challenging due to managing reactivity control by control rods alone and tedious disassembling of the control rod mechanism while maintaining the reactor in safe shut-down state during refueling operations. In-vessel control rod drives may be a preferred solution for many reactors operating under natural circulation, in which case maintaining sufficient coolant flow requires considerable elevation between the reactor core and primary heat exchangers, which is also reflected in the overall height of the reactor pressure vessel and the length of the control rod shafts. This is in particular the case for low-temperature reactors, in which the operating conditions are less challenging for electric components. There is therefore a need to improve in-vessel control rod systems in reactor types where such configuration is an attractive option.

US2013044850A1 discloses a method which comprises the refuelling of a nuclear reactor and includes removing a fuel assembly having a control rod assembly inserted in the fuel assembly.

### SUMMARY

A novel fuel and control system is therefore herein proposed. The invention is defined by the features of the independent claims. Some specific embodiments are defined in the dependent claims.

According to a first aspect of the present disclosure, there is provided a fuel and control system featuring a drive motor, a control rod assembly, a fuel unit and a frame. The frame attaches the drive assembly to the fuel unit and provides a space for control movement of the control rod assembly so that the frame, the fuel unit, the drive assembly and the control rod assembly are integrated so that the fuel and control system is configured to be loaded into and unloaded out of the nuclear reactor as one unit.

One or more embodiments of the first aspect may include one or several features from the following itemized list:
- the frame comprises a first frame attachment counterpart configured to provide a first attachment between the drive assembly and the frame, and where the frame lower section is configured to provide a second attachment between the frame and the fuel unit so that the fuel and control system is configured to move as one unit;
- the frame comprises a frame upper section and a frame lower section where the frame comprises a frame height which spans between the frame upper section and the frame lower section, where the frame height is equal to or greater than the height of the fuel unit, and where the frame height is configured to allow the control rod assembly to travel a travel distance;
- the control rod assembly is configured to be lifted by the fuel unit when the frame is lifted;
- the drive assembly and the control rod assembly are configured to detach as one unit from the frame;
- the fuel and control system comprises a contact point where the contact point is configured to come into contact with a reloading machine and where the reloading machine lifts the fuel and control system at the contact point;
- the contact point is on the frame;
- the fuel and control system further comprises an instrumentation and an instrumentation guide for housing a plurality of instrumentation wiring for the instrumentation, where the instrumentation guide is incorporated into the frame;
- the fuel and control system further comprises a drive motor electrical connector and an instrumentation electrical connector, where the drive motor electrical connector is configured to provide power to a drive motor, and the instrumentation electrical connector is configured to provide electrical connections to the instrumentation, and allow signals to be transmitted from the instrumentation, and
- the instrumentation electrical connector is located at a first instrumentation guide end.

According to a second aspect of the present disclosure, there is provided a nuclear reactor featuring a reactor core, a pressure vessel and a plurality of fuel and control system where the fuel and control system is contained inside the pressure vessel.

One or more embodiments of the second aspect may include one or several features from the following itemized list:
- the nuclear reactor further comprises a connector grid plate configured to provide power and electrical connections to a plurality of fuel and control systems;
- the connector grid plate is configured to prevent the removal of the fuel and control system while the connector grid plate is in a connected state, provide electrical power connections to the drive motor while the connector grid plate is in the connected state, and disconnect power connections from the drive motor while the connector grid plate is in a disconnected state;
- the connector grid plate is configured to provide power and electrical connections to the instrumentation while the connector grid plate is in the connected state, and disconnect electrical connections from the instrumentation while the connector grid plate is in the disconnected state, and
- the connector grid plate further comprises a plurality of drive motor and instrumentation electrical connector counterparts configured to connect to and disconnect from the drive motor electrical connectors and the instrumentation electrical connectors of each fuel and control system in the nuclear reactor, and a main electrical connector configured to connect to a power source, where there is no electrical connection, while the connector grid plate is in the disconnected state, between the power source and the drive motor electrical connector, and between the power source and the instrumentation electrical connector.

According to a third aspect of the present disclosure, there is provided a method for refueling a nuclear reactor featuring unloading a first fuel unit by removing a fuel and control system as one unit from the reactor core, and reloading a second fuel unit by inserting a fuel and control system as one unit into the reactor core.

One or more embodiments of the third aspect may include one or several features from the following itemized list:
- a reloading machine comes into contact with the fuel and control system via the contact point and the reloading machine causes the fuel and control system to be in a first transportation state and a third transportation state;
- reusing the drive assembly and the control rod assembly of the first fuel unit in the second fuel unit by removing the drive assembly and control rod assembly as one unit from the first fuel unit after said unloading;
- removing the connector grid plate before said unloading where the main electrical connector is disconnected from a main electrical connector counterpart causing zero electrical power to be provided to the drive assembly;
- the disconnection of the main electrical connector from the main electrical connector counterpart causes zero electrical power to be provided to the instrumentation;
- where the zero electrical power provided to the drive assembly prevents a plurality control rods of the control rod assembly from being withdrawn from a lowered position, which prevents the nuclear reactor from becoming critical during the unloading of the first fuel unit and during the loading of the second fuel unit, and
- replenishing one fuel unit of the plurality of fuel units at a time.

According to a fourth aspect of the present disclosure, there is provided a method of operating the nuclear reactor featuring the fuel and control system where the reactor core is subject to a boron free operation.

Considerable benefits are gained with the aid of the novel fuel and control system. The fuel and control system ensures that at least the control rod assembly, the drive motor and the fuel unit move as one unit to allow for convenient removal of the fuel unit. The fuel and control system mitigates the criticality safety challenges associated with reactors operating without soluble boron primarily by eliminating the need to remove individual components such as the drive assembly, which could lead to the inadvertent removal of the neutron-absorbing control rods. This enables the fuel and control rod system to be designed in such way, that the reactor cannot become critical during reloading operations. This is ensured by two factors. First, the control rod assembly is maintained in the fuel unit when the fuel and control system is moved as a single unit. Second, the design of the components prevents the control rod assembly to be withdrawn from the fuel unit by actuating the drive unit, since the electric connections have to be disconnected before accessing the core. Further, the fuel and control system simplifies the reloading operations by integrating all reactivity control and instrumentation systems into a single modular component. The fuel and control system enables combining various attractive options in reactor design: boron-free operation and in-vessel control rod drives, the combination of which has been previously limited by conflicting constraints in known solutions.

### BRIEF DESCRIPTION OF THE DRAWINGS

In the following certain exemplary embodiments are described in greater detail with reference to the accompanying drawings, in which:
- FIGURE 1: illustrates a cross-sectional view of a nuclear reactor in accordance with at least some embodiments;
- FIGURE 2: illustrates a perspective view of the fuel and control system in accordance with at least some embodiments;
- FIGURE 3: illustrates a perspective view of an exploded view of the fuel and control system of FIGURE 2;
- FIGURE 4: illustrates a perspective view and a top view of a drive assembly;
- FIGURE 5: illustrates a perspective view and a top view of a frame:
- FIGURE 6: illustrates a perspective view and a section view of a control rod assembly;
- FIGURE 7A: illustrates a perspective view of at least a section of a radial reflector and a connector grid plate;
- FIGURE 7B: illustrates a top view of the radial reflector and the connector grid plate of FIGURE 7A, and
- FIGURE 8: illustrates a perspective view a second transportation state and a plurality of first fuel units and a plurality of second fuel units.

### EMBODIMENTS

"Fuel unit" is known as a fuel assembly in the field of nuclear engineering. "Electrical connector" refers to an electrical connection, for example electrical leads or wires which may connect to a socket or other leads of another component. "Electrical connector counterpart" refers to a socket or another electrical connection, for example an electrical connection meant to connect the ends of electrical leads. "Attachment" without the connotation of "electrical" may refer to a physical attachment between surfaces or components and may refer to mating surfaces between surfaces or components.

In the present context expressions "fuel and control system" and "fuel and control module" can be used interchangeably.

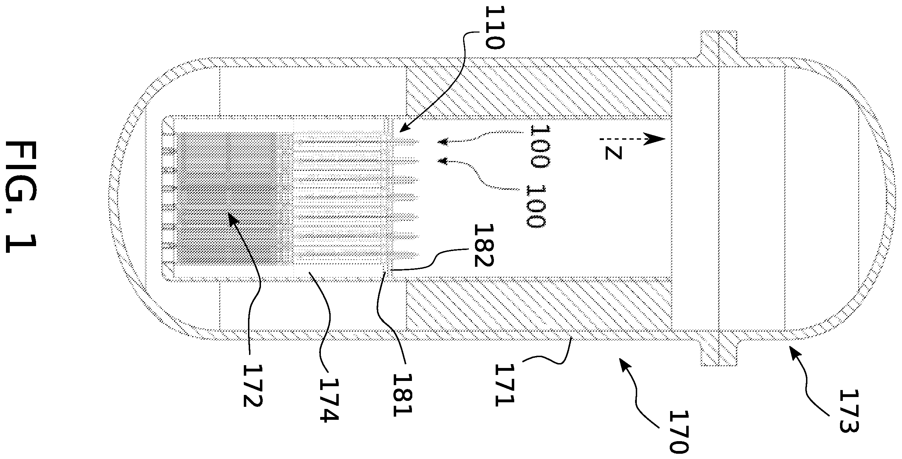

FIGURE 1 illustrates a nuclear reactor 170 in accordance with at least some embodiments. The nuclear reactor 170 comprises a reactor core 172 encased in a pressure vessel 171, which in turn comprises a lid 173. The reactor core 172 is located at a lower section of the pressure vessel 171. The pressure vessel 171 defines an inner volume of the nuclear reactor 170. The reactor core 172 is located inside the pressure vessel 171. A plurality of fuel and control systems 100 are located inside the pressure vessel 171. The fuel and control system 100 comprises a drive assembly 110 and a fuel unit 150. According to this illustrated embodiment the drive assembly 110 is located inside the pressure vessel 171. While in operation, the fuel unit 150 of each fuel and control system 100 is located in the lower section of the pressure vessel 171, in which the fuel units 150 are gathered together to make up the reactor core 172.

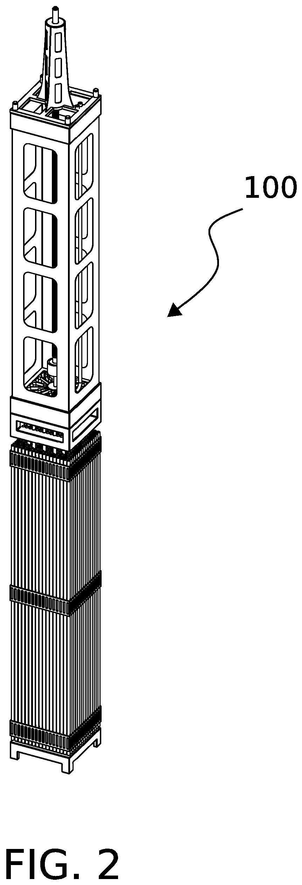

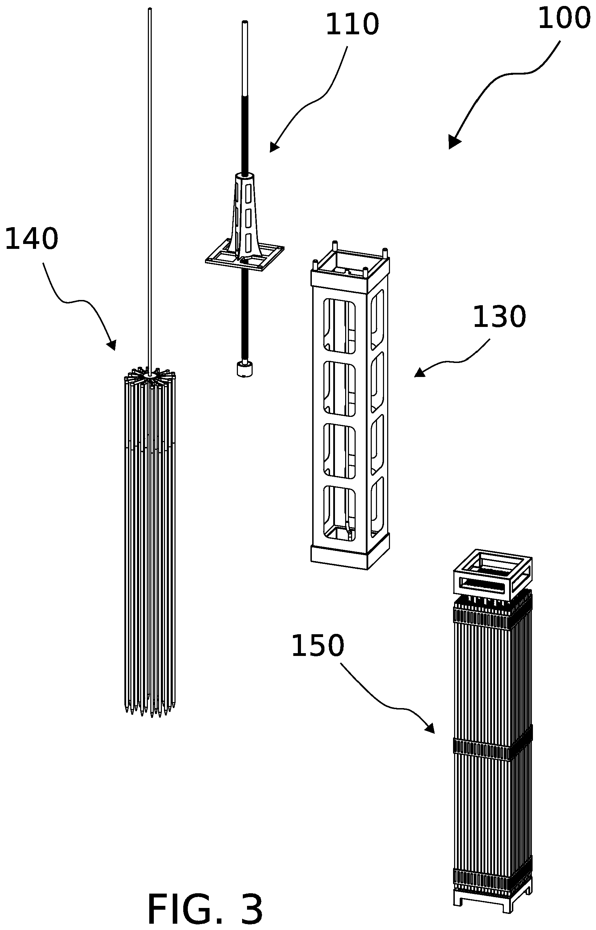

FIGURE 2 and FIGURE 3 illustrate the fuel and control system 100. The fuel and control system 100 has the drive assembly 110, as mentioned before, a frame 130, a control rod assembly 140, and the fuel unit 150.

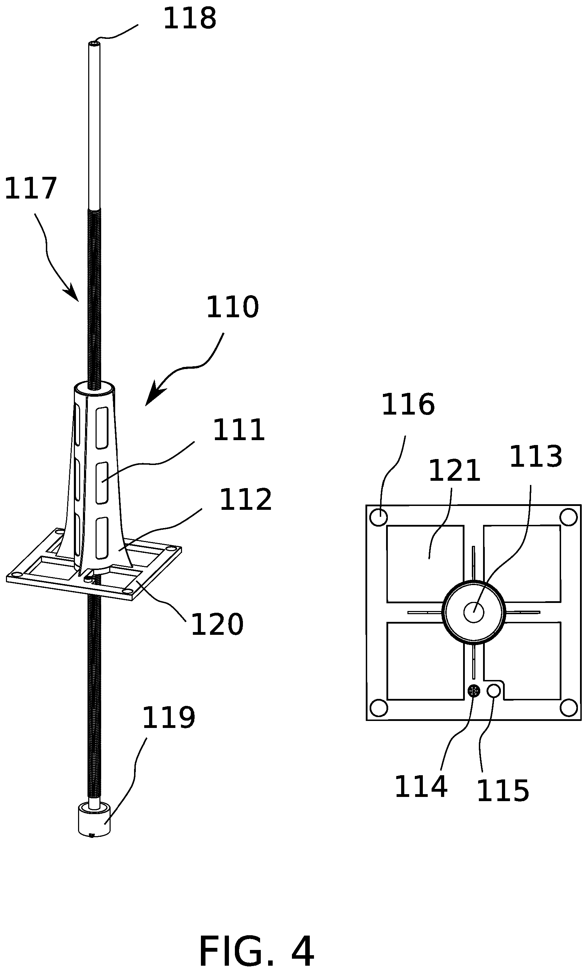

FIGURE 4 illustrates the drive assembly. According to the illustrated embodiment, the drive assembly 110 has a drive motor frame 112 and a drive motor 111 located inside the drive motor frame 112. The drive motor frame 112 surrounds the drive motor 111 to hold the drive motor 111 in place and provides drive motor frame 112 attachments to other components. The drive motor frame 112 is rigidly attached to a drive flange 120. The drive motor frame 112 and the drive flange 120 may be attached by welding or the drive motor frame 112 and drive flange 120 may be cast as a single component or may be assembled with bolts or other fasteners. The drive flange 120 enables an attachment between the drive assembly 110 and the frame 130. The drive flange 120 has a first frame attachment 116 that provides the attachment, which is a temporary attachment. The drive flange 120 has a drive motor 111 electrical connector 114 and an instrumentation opening 115. The electrical connector 114 may be an inductive connector.

According to the illustrated embodiment FIGURE 4, the drive assembly 110 has a linear translator 117 coaxially attached to the drive assembly. The drive assembly 110 has a linear translator opening 113 located coaxially with the drive motor. The linear translator opening 113 extends through the drive motor 111 where the linear translator 117 translates through. The linear translator opening 113 extends through the drive motor 111 so that the drive motor 111 is wrapped around the outer surface of the linear translator 117. The linear translator 117 has a shaft opening 118 which extends from at a first linear translator end to a second linear translator end. At the second linear translator end, there is an electromagnet 119 in which the shaft opening 118 extends through.

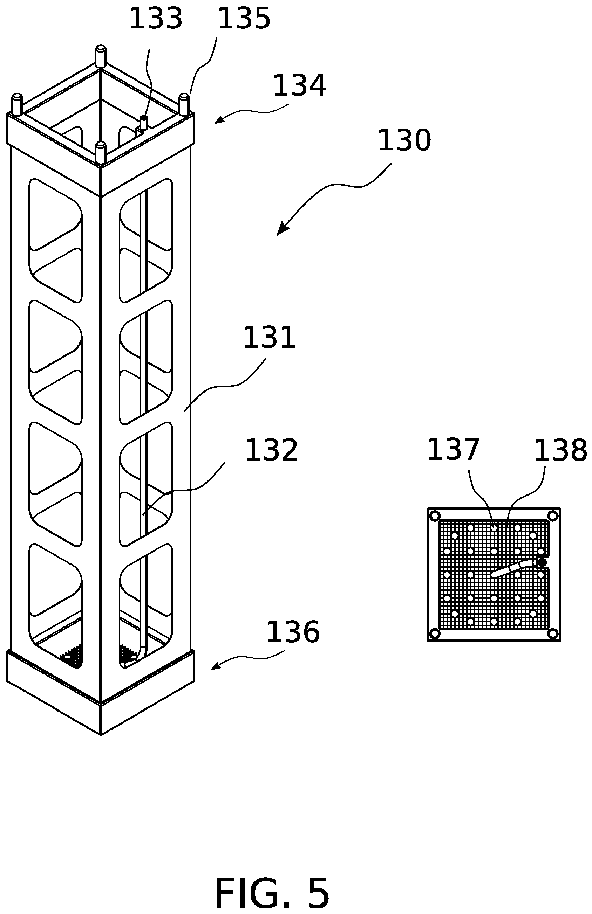

FIGURE 5 illustrates the frame 130. According to the illustrated embodiment the frame 130 has a profile 131, a frame upper section 134 and a frame lower section 136. The frame 130 has a frame height, which is the distance between the frame upper section 134 and the frame lower section 136. The frame 130 has an instrumentation guide 132, which may be in the form of a hollow tube, rod or a cover. The instrumentation guide 132 acts as a guide for the instrumentation electrical wires, or wiring, and holds them in place. According to at least some embodiments, instrumentation guide 132 is permanently attached to the frame 130 or is incorporated into the frame 130, and the instrumentation guide 132 may be manufactured as part of the frame 130. The instrumentation guide 132 also serves the purpose to not disrupt the movement of other components such as the control rod assembly 140. For example, if the instrumentation electrical wires were loose they could tangle with a plurality of control rods 144 and cause an unsafe malfunction in the control rod assembly 140, such as preventing the control rods 144 from travelling downwards. At a first instrumentation guide end there is an instrumentation electrical connector 133, which is attached to the instrumentation electrical wires. The instrumentation guide 132 continues through the frame lower section 136. At a second instrumentation guide end there is an instrumentation for taking measurements. The second instrumentation guide end and the instrumentation may be located in the fuel unit 150. The instrumentation guide end may be split to accommodate for the attachments between components, such as the fuel unit 150 and the frame 130. The instrumentation guide 132 may branch into different branches to provide passage for electrical wiring to other sensors, such as a temperature sensor in other locations in the fuel and control system 100. For example, a temperature sensor may be located near the frame 130. At the frame lower section 136 there are a plurality of control rod openings 137 and there may be a mesh 138.

According to the illustrated embodiment FIGURE 5, at the frame upper section 134 there is a first frame attachment counterpart 135 that attaches, temporarily, to the first frame attachment 116 of the drive assembly. According to the illustrated embodiment, the first frame attachment counterpart 135 is the form of a pin and the first frame attachment 116 is in the form of a hole which guides the first frame attachment counterpart 135 into the first frame attachment 116. This manner of attaching provides a temporary attachment that hold the drive assembly 110 and the frame 130 in place when the reactor is in operation.

As is shown in FIGURE 3, the frame 130 is a distinct component from the fuel unit 150. The frame lower section 136 is used to attach the frame 130 to the fuel unit 150. More specifically, the frame 130 sits atop the fuel unit 150. The fuel unit 150 preferably contains a top crate best shown in FIGURE 3 for attachment to the frame lower section 136.

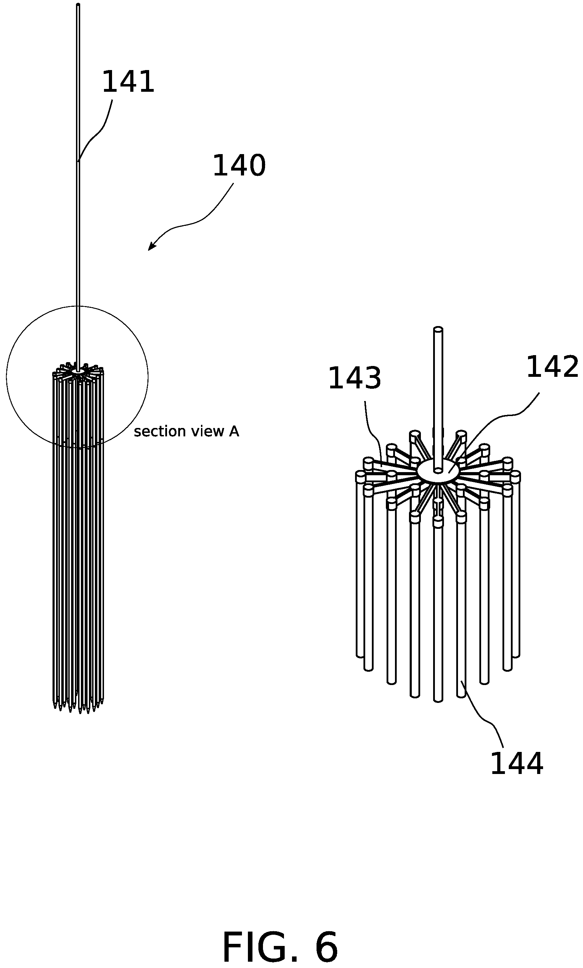

FIGURE 6 illustrates the control rod assembly 140. The control rod assembly 140 has a shaft 141 at a first control rod assembly end, a plate 142 and a plurality of control rods 144 at a second control rod assembly end. The control rods 144 are rigidly attached to the shaft 141 by a plurality of supports 143. The plate 142, which is made of a material known to attach to electromagnets, for example, a ferromagnetic material, attaches at least temporarily to the electromagnet 119 of the drive assembly. Thus, the attachment between the plate 142 and the electromagnet 119 provide an attachment between the control rod assembly 140 and the drive assembly. In at least some embodiments, at least a portion of the shaft 141 is coaxially located inside the shaft opening 118 of the drive assembly. The length of the shaft 141 is approximately the same length as the range of movement, i.e. the height of the fuel unit 150. The control rods 144 are arranged so that they are guided through the control rod openings 137 of the frame 130.

FIGURE 3 illustrates a view of the fuel unit 150. According to at least some embodiments, the control rods 144 interact with the fuel unit 150 and are placed inside the fuel unit 150. The control rods 144 may be placed inside the fuel unit 150 where most of a length of the control rods 144 are inside the fuel unit 150. The length of the control rods 144 may be the same or slightly less as the height of the fuel unit 150. The length of the control rods 144 must be long enough to be able to cover the entirety of an active height of the fuel unit 150. As shown in FIGURE 2, a fuel unit upper section is attached to the frame lower section 136. This attachment is secured to allow the fuel unit 150 to be moved with the frame 130.

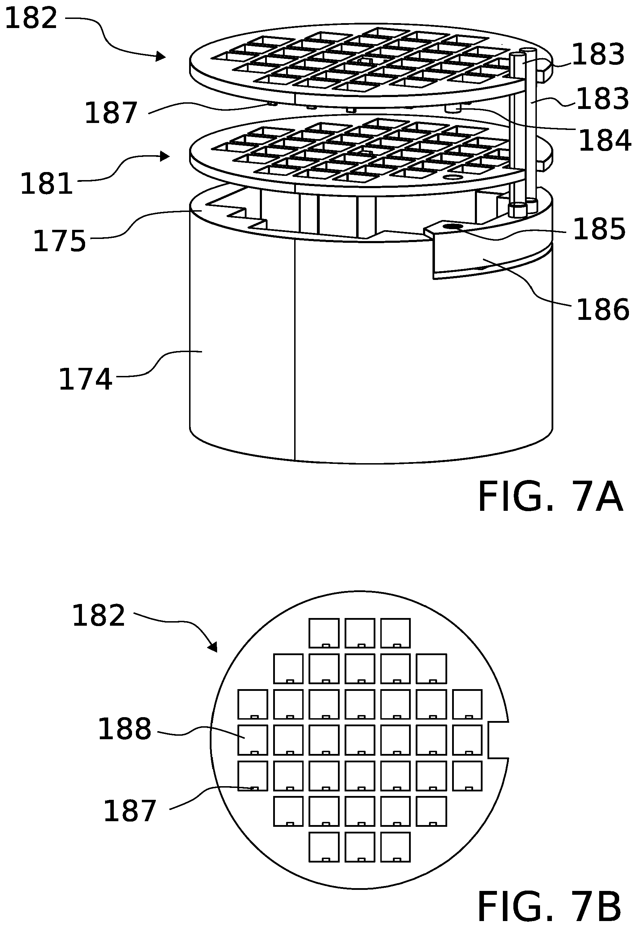

FIGURE 7A and FIGURE 7B illustrate a view of a radial reflector 174. The nuclear reactor 170 comprises the radial reflector 174 surrounding the reactor core 172. The radial reflector 174 may have a radial reflector upper surface 175. During operation, a support grid plate 181 may be located on top of the radial reflector upper surface 175 and above the reactor core 172. The support grid plate 181 has support grid plate openings, which are located above each fuel and control system 100. The support grid plate 181 provides structural support for other components, therefore the nuclear reactor 170 may have another arrangement known *per se* to support the fuel and control systems 100. According to the illustrated embodiment, a connector grid plate 182 is placed on top of the support grid plate 181. According to another embodiment, the connector grid plate 182 is located below the support grid plate 181. The connector grid plate 182 is a component with a body that is at least partially solid and at least partially hollow. The connector grid plate 182 has a plurality of wires for distributing electric power and electric connections to a plurality of fuel and control systems 100, where the wires may be located within the hollow portions of the connector grid plate 182. According to at least some embodiments, the plurality of wires of the connector grid plate 182 run along and inside the body of the connector grid plate 182. The connector grid plate 182 has a plurality of connector grid plate openings 188 where each opening 188 is located above a fuel and control system 100. The support grid plate openings may be the same or similar size than the connector grid plate openings 188. The connector grid plate 182 has a plurality of drive motor and instrumentation electrical connector counterparts 187, in which each connector grid plate opening 188 has one drive motor and instrumentation electrical connector counterpart 187. Each drive motor and instrumentation electrical connector counterpart 187 is configured to connect to the drive motor electrical connector 114 and the instrumentation electrical connector 133 of each fuel and control system 100. According to at least some embodiments, the drive motor and instrumentation electrical connector counterpart 187 has one socket or appropriate counterpart for each of the drive motor electrical connector 114 and the instrumentation electrical connector 133. In other words, the drive motor and instrumentation electrical connector counterpart 187 may have two sockets or appropriate counterparts.

According to at least some embodiments, at least a portion of the fuel and control system 100 is located under the grid plates 181, 182. A portion of the drive assembly 110 and the control rod assembly 140 may be located above the grid plates 181, 182, however the connector grid plate opening 188 and the support grid plate opening are openings where the entire structure of each of the drive assembly, the frame 130, the fuel unit 150, and the control rod assembly 140, cannot go through due to the size of these openings. According to at least some embodiments, the width of the grid plate opening 188 is smaller than the width of the frame 130 and the width of the drive flange 120.

The connector grid plate 182 has a main electrical connector 184, which connects to a main electrical connector counterpart 185. The nuclear reactor 170 may have a connector block 186 where, according to the illustrated embodiment FIGURE 7A, the main electrical connector counterpart 185 is located on. The main electrical connector counterpart 185 may be an inductive connector. The nuclear reactor 170 has electric cables 183 which are connected to a power source on a first electric cable end and to the connector block 186 at a second electric cable end. A portion of these electric cables 183 are the cables used to transmit data from the instrumentation.

The following paragraphs describe the usage of components of the fuel and control system 100.

The nuclear reactor 170 as illustrated in FIGURE 1 has the pressure vessel 171 in which the fuel and control system 100 has a drive assembly 110 located inside the pressure vessel 171. This means that the drive assembly 110 is operated in a fluid contained in the pressure vessel 171. The fluid acts as the coolant for the reactor core.

During operation, the drive motor and instrumentation electrical connector counterpart 187 is connected to the drive motor electrical connector 114 and the instrumentation electrical connector 133. While these connectors are connected, the main electrical connector 184 and the main electrical connector counterpart 185 are connected and therefore power and electrical connections are being supplied by the electric cables 183 to the drive motor 111 and the instrumentation via the main connector and the drive motor electrical connector 114. As a result, the connector grid plate 182, when installed, provides an electrical connection to the drive motor 111 and the electromagnet 119, provides transmission of data and other signals to and from the instrumentation, and provides electric current to power the instrumentation. The connector grid plate 182 has a body that is at least partially solid. According to at least some embodiments, when the connector grid plate 182 is installed, each of the drive motor and instrumentation electrical connector counterparts 187 connects to the corresponding drive motor electrical connector 114 and the instrumentation electrical connector 133 of each fuel and control system 100. This manner of connecting allows the electrical connections to be made all at once (due to the at least partially solid body of the connector grid plate 182), rather than having to connect the electrical connection individually. As a result, a function of the connector grid plate 182 is to make electric connections time-efficient. The connector grid plate 182 acts as a bridge between the electric cables 183 and the drive motor electrical connector 114 with the instrumentation electrical connector 133. Therefore, the installment and detachment of the connector grid plate 182 determines whether the electrical connections provided to the drive motor 111 and the instrumentation are connected or not. When the connector grid plate 182 is installed and providing power and electric connections, the connector grid plate 182 is in a connected state.

The connector grid plate 182 also allows signals of data to transmit from the instrumentation to a receiving device for receiving data which is located outside of the nuclear reactor 170.

The electric cables 183 may be connected directly to the main electrical connector counterpart 185 so that when the main electrical connector counterpart 185 is in connection with the main electrical connector 184, the electric cables 183 provide electric power to the connector grid plate 182 from the power source.

When the coolant is a liquid, the electric connectors and electric connector counter parts are "wet-mated", meaning that the connection can be established while submerged in the coolant.

When the grid plates 181, 182 are attached to the nuclear reactor 170 and are therefore electrically connected and in operation, the grid plates 181, 182 prevent the drive assembly, the frame 130, and the fuel unit 150 from being transported. In other words, the grid plates 181, 182 and the fuel and control system 100 are arranged where the fuel and control system 100 cannot be removed from the pressure vessel 171 unless the grid plates 181, 182 are removed first. Therefore the grid plates 181, 182 hold the drive assembly 110, the frame 130, and the fuel unit 150 in place. The drive assembly 110 may cause the control rod assembly 140 to be at least partially withdrawn from the fuel unit 150, however the grid plates 181, 182 hold the drive assembly 110 in place, and the control rod assembly 140 is unable to travel through the drive assembly 110 due to the electromagnet 119 and supports 143 not fitting through the linear translator opening 113. Further, the control rod assembly 140 can move the distance of the active height within the fuel unit 150.

When the fuel units 150 are ready to be replaced, the refueling operation commences. The nuclear reactor 170 is first manually shut down, by driving the control rods 144 to the lowered position. The lid 173 of the pressure vessel 171 can be opened to access the reactor core 172 and the fuel and control system 100. Subsequently, the grid plates 181, 182 are removed and thereafter the grid plates 181, 182 are in a disconnected state. The disconnection of the connector grid plate 182 causes the plurality of drive motor and instrumentation electrical connector counterparts 187 to disconnect from the drive motor electrical connector 114 and the instrumentation electrical connector 133 of each fuel and control system 100 in the reactor core 172 in one instance. Further, the main electrical connector 184 and the main electrical connector counterpart 185 are no longer connected and therefore no power is being supplied by the electric cables 183. This ensures that there is no electric power in the fuel and control system 100 and in the reactor core 172 when the connector grid plate 182 is removed. To summarize, the disconnected state of the grid plate 182 causes no power to be provided to the drive motor, the electromagnet 119 and the instrumentation, and prevents the instrumentation to transmit or receive signals.

As there is no power provided to the drive motor 111 and the electromagnet 119 is no longer energized, the control rods 144 cannot be withdrawn from the lowered position, inadvertently or otherwise. This is crucial because this ensures that all control rods 144 are fully inserted, and the reactor remains in a safe shutdown state. It is also crucial that the control rods 144 are in a lowered position while the core is being disassembled, and the fuel and control system 100 is being transported, or more specifically unloaded and loaded.

A reloading machine, not shown in the figures, can make contact with the frame 130 in order to remove the fuel and control system 100 out of the reactor core 172. The removal of the fuel and control system 100 out of the reactor core 172 is called a first transportation state. In other words, when the reloading machine is lifting the frame 130, the following components are being lifted also: the drive assembly, the control rod assembly 140 and the fuel unit 150. Therefore the drive assembly, the frame 130, the control rod assembly 140 and the fuel unit 150 move as one single unit during the first transportation state. This is accomplished by the attachment the frame 130 makes between the drive assembly 110 and the fuel unit 150. According to at least some embodiments, the reloading machine moves the fuel and control system 100 in the direction indicated as Z in FIGURE 1. According to at least some embodiments, the reloading machine removes one fuel and control system 100 at a time.

As mentioned previously, the frame 130 has a frame height. The frame 130 creates a space which is open or preferably at least partially enclosed. The frame height is a certain length to allow the control rod assembly 140 to travel at least partially within the space of the frame 130 while the fuel and control system 100 is in operation in the pressure vessel 171. The frame height therefore affects the range of movement of the control rod assembly 140 and the control rods 144. The movement of the control rod assembly 140 and the control rods 144 while in operation is for changing the neutron absorption rate in the reactor core 172. This movement may be referred to as control movement.

According to at least some embodiments, the reloading machine is designed in such way that it cannot make contact with and lift the drive assembly, thereby disconnecting it from the frame 130 Also, the reloading machine is designed to make contact with and lift the frame 130. According to FIGURE 2, FIGURE 3, FIGURE 4, the drive assembly 110 has four reloading machine openings 121 through which the reloading machine reaches into and then subsequently attaches to the frame 130 at the frame upper section 134. The drive assembly 110 may have no reloading machine openings 121 or less than four or more than four reloading machine openings 121 in order to accommodate the prongs or attachment mechanism of the reloading machine to the frame 130. The reloading machine openings 121 also serve the function to let coolant flow through the fuel and control system 100. The shape of the reloading machine is designed where the reloading machine avoids making an attachment with the drive assembly 110 so that when the reloading machine is moved upwards, the reloading machine does not cause a situation where the drive assembly 110 is lifted out of the reactor core 172 without the frame 130. In other words, a function of the reloading machine is to lift the frame 130 and cause the drive assembly 110 to move with the frame 130. At this stage, the electromagnet 119 would be disconnected, however the manner in which the reloading machine avoids making an attachment with the drive assembly, ensures that the drive assembly 110 is unable to be removed from the frame 130 and possibly cause the control rods 144 to be withdrawn away from the fuel unit 150 while the fuel unit 150 is in the reactor core 172, which would compromise criticality safety.

The arrangement of the fuel and control system 100 is designed to ensure criticality safety because the fuel and control system 100 is lifted as the frame 130 is lifted by the reloading machine. The reloading machine comes into contact with the frame 130 at a contact point, not shown in the figures. The contact point may be at the frame upper section 134. Since the frame 130 is attached to the drive assembly, the drive assembly 110 moves with it. According to the illustrated embodiments FIGURE 2, FIGURE 4, and FIGURE 5, the drive assembly 110 is placed on top of the frame 130 and attached at the first frame attachment 116 and at the first frame attachment counterpart 135. Since the drive assembly 110 is on top of the frame 130 and since the attachments keep the frame 130 and drive assembly 110 secure, the drive assembly 110 moves with the frame 130. The fuel unit 150 is attached to the frame 130, and therefore the fuel unit 150 also moves with the frame 130 when the frame 130 is being transported by the reloading machine.

The fuel unit 150 has a plurality of control rod guide tubes for the control rods 144 to travel into, and where the control rods 144 can travel at least most of the height of the fuel unit 150. Located at the bottom of each control rod guide tube, is a dashpot or stopping surface that defines an end of the control rod guide tube. The stopping surface prevents each control rod 144 from travelling further downward. The control rod assembly 140 may move downward until a bottom end of the control rod comes into contact with the stopping surface. When the control rods 144 come into contact with the stopping surface, the control rods 144 are in a lowered state and thus rest at the stopping surface. As a result, the stopping surface allows each control rod 144 to stay in place by gravity. Therefore, when the fuel unit 150 is transported, the control rods 144 and the control rod assembly 140 is transported with the fuel unit 150. The active height of the fuel unit 150 may determine the frame height since the control movement range within the fuel unit 150 may be the same or substantially the same as the control movement range within the space of the frame 130.

To summarize the attachments within the fuel and control system 100 during the first transportation state, the frame 130 is attached to both the drive assembly 110 and the fuel unit 150. Further, the control rod assembly 140 is in connection with the fuel unit 150 when the control rods 144 are in the lowered state. As a result, when the frame 130 is transported, the transporting of the frame 130 causes the drive assembly, the fuel unit 150, and the control rod assembly 140 to be transported also. The structural integrity of the frame 130 or the profile 131 enables the fuel and control system 100 to transport as a one unit.

Once the reloading machine has a secured attachment with a fuel and control system 100, an unloading stage commences and therefore the reloading machine transports the fuel and control system 100, during the first transportation state, out of the reactor core 172 and out of the pressure vessel 171. According to at least some embodiments, the reloading machine lifts the fuel and control system 100 upwards while exiting the reactor core 172 and the pressure vessel 171. Then, the reloading machine may transport the fuel and control system 100 in a direction necessary to place the fuel and control system 100 onto a support rack, not shown in the figures, to hold the fuel and control system 100 in place. Once the support rack holds the fuel and control system 100 in place, the attachment between the reloading machine and the fuel and control system 100 may be detached and thus defines the end of the process of the first transportation state, according to at least some embodiments.

The reloading machine can repeat this process and cause other fuel and control systems 100 to be in a first transportation state and thus be unloaded from the pressure vessel 171 to the support rack.

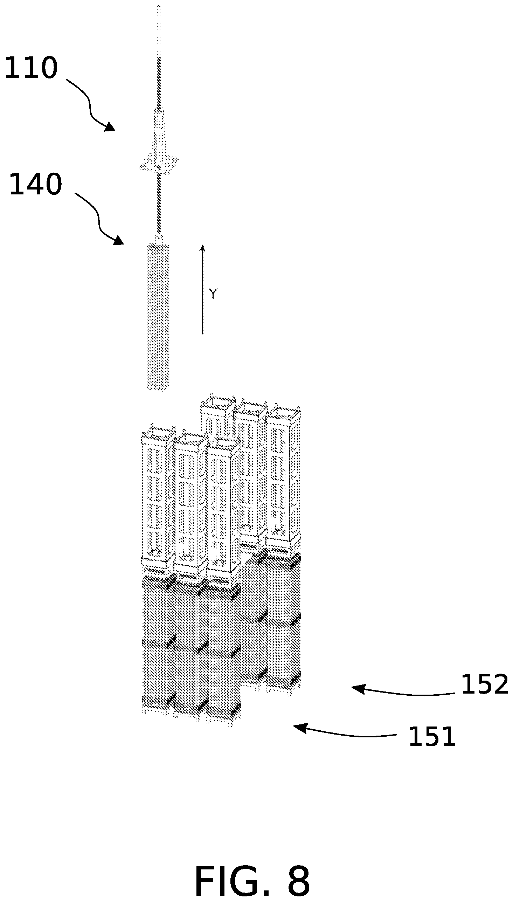

The support rack may hold many fuel and control systems 100 in place. The support rack is designed in such way, that criticality safety is ensured by geometry. This means that there is enough distance between the fuel units 150 to prevent the neutron chain reaction from being started even when the control rod assemblies 140 are removed from the fuel units 150. Alternatively, criticality safety can be ensured by placing neutron absorbing materials in the structures of the support rack. FIGURE 8 illustrates that the fuel and control systems 100 may be positioned to their sides, however FIGURE 8 is for illustration purposes and the figure does not depict the distance in which each of the fuel and control system 100 may be distanced from each other while outside of the reactor core 172.

During the refueling process, the fuel units 150 of the fuel and control system 100 that are removed from the reactor core 172 are fuel units that may be used again for the loading process or spent fuel units 150, which become waste. This depends on the amount of cycles of usage the fuel unit 150 has been subject to, until the fuel unit 150 becomes waste, which may be, for example, 3 times. The fuel unit 150 that has been used for at least one cycle or is subject to become waste as a spent fuel unit, is referred to as a first fuel unit 151. FIGURE 8 depicts a plurality of first fuel units 151. The drive assembly 110 and the control rod assembly 140 may be reused. After the fuel and control system 100 has been removed from the reactor core 172, and placed on the support rack, the drive assembly 110 and the control rod assembly 140 are separated from the frame 130 and the first fuel units 151.

FIGURE 8 illustrates the drive assembly 110 and the control rod assembly 140 being separated from the fuel unit 150 and fuel assembly. When the drive assembly 110 and the control rod assembly 140 are transported away from the fuel unit 150, the drive assembly 110 and the control rod assembly 140 are in a second transportation state.

During the second transportation state the drive assembly 110 and the control rod assembly 140 are transported by a replacing machine. The replacing machine comes into contact at a second contact point located on the drive assembly. The replacing machine transports the drive assembly 110 and the control rod assembly 140. As the drive assembly 110 and the control rod assembly 140 are transported during the second transportation state, the drive assembly 110 and the frame 130 are detaching. As a result, the first frame attachment 116 and the first frame attachment counterpart 135 detach. According to at least some embodiments, the first frame attachment 116 and the first frame attachment counterpart 135 are in the form of a hole and a pin, respectively. Therefore, as the drive assembly 110 is transported during the second transportation state, the hole 116 moves out of the pin 135 and therefore the drive assembly 110 detaches from the frame 130. Therefore, the first frame attachment 116 and the first frame attachment counterpart 135 achieve an attachment during the first transportation state, and they are able to detach during the second transportation state.

The drive assembly 110 and the control rod assembly 140 are designed to be transported as one unit during the second transportation state. Thus, there is an attachment made between the drive assembly 110 and the control rod assembly 140 during the second transportation state. According to at least some embodiments, the replacing machine provides power to the drive assembly 110 and causes the electromagnet 119 to attach to the plate 142 of the control rod assembly 140. This way, as the replacing machine transports the drive assembly, the control rod assembly 140 is transported also. In addition, the replacing machine may mechanically attach, even if electric power is lost, to the control rod assembly 140 or shaft 141, where the shaft 141 protrudes through the shaft opening 118, in order to avoid the control rod assembly 140 from falling down in case electric power is lost during the second transport state.

According to the illustrated embodiment FIGURE 8, the replacing machine transports the drive assembly 110 and the control rod assembly 140 in a direction, noted as Y, away from the frame 130 and the first fuel unit 151. According to FIGURE 8, the drive assembly 110 and the control rod assembly 140 are transported, in the second transportation state, into a fuel unit, which will be loaded into the reactor core 172, and into a new frame 130. This fuel unit is referred to as a second fuel unit 152. The second fuel unit 152 may be a fresh fuel unit or a fuel unit that has previously been used or cycled through unless it is at the end of its designed life. The second fuel 152 unit differs from the first fuel unit 151 in that the second fuel unit 152 is prepared to be loaded or is loaded into the reactor core 172 in the third transportation state, whereas the first fuel unit 151 is unloaded from the reactor core 172 in the first transportation state. A first fuel unit 151 that is not at the end of its designed life may become a second fuel unit 152 after the drive assembly 110 and the control rod assembly 140 are removed. The new frame 130 may be a reused frame 130. The frame 130 may be reused or may be waste. According to at least some embodiments, the frame 130 is not detached from the fuel unit 150 and both the frame 130 and the fuel unit 150 are relocated for waste management.

During the second transportation state, the replacing machine guides the drive assembly 110 and the control rod assembly 140 into the other frame 130 and the corresponding second fuel unit 152. According to at least some embodiments, the replacing machine lowers the drive assembly 110 and the control rod assembly 140 where the control rods 144 are guided into the control rod guides and then further lowered and guided into the second fuel unit 152. As the control rods 144 are guided into the second fuel unit 152, the first frame attachment 116 and first frame attachment counterpart 135 will be attached. According to at least some embodiments, the first frame attachment 116 and the first frame attachment counterpart 135 are in the form of a hole and a pin, respectively, and the hole is guided to surround the pin. The function of the first frame attachment 116 and the first frame attachment counterpart 135 is to provide an attachment, or a mating of surfaces, where the drive assembly 110 can be moved with the frame 130 and moved without falling to one side or shifting to one side when the frame 130 is moved. After the control rods 144 are in the second fuel unit 152 and the first frame attachment 116 and the first frame attachment counterpart 135 are attached, the replacing machine is detached from the drive assembly, causing the end of the second transportation state. If the replacing machine provides power to the drive assembly, detaching the replacing machine will ensure that there is no power provided which could cause the control rods 144 to move out of the fuel unit 150.

The replacing machine can repeat this process and cause other drive assemblies 110 and control rod assemblies 140 to be in the second transportation state and thus be moved from other first fuel units 151 to other second fuel units 152.

The new fuel and control system 100, which has the second fuel unit 152, the drive assembly, the control rod assembly 140, and the frame 130, is ready to be transported in a third transportation state to be loaded into the pressure vessel 171. This is the loading stage. The reloading machine comes into contact with the new fuel and control system 100 in the same or similar manner as in the unloading stage. The reloading machine transports the new fuel and control system 100 from the support rack to a location above the pressure vessel 171 and lowers the new fuel and control system 100 into the pressure vessel 171 and into the reactor core 172. Once the new fuel and control system 100 is accurately placed into the correct position inside the reactor core 172, the reloading machine detaches from the new fuel and control system 100. The reloading machine can transport more new fuel and control systems 100 into the pressure vessel 171. The grid plates 181, 182 are out of the way, and do not interfere, while the fuel and control systems 100 are loaded and unloaded.

After the reloading operation has been completed, the grid plates 181, 182 are placed above the fuel and control systems 100. The grid plates 181, 182 are installed and are thereafter in a connected state. Now the control rod assembly 140 is able to translate within the fuel unit 150 to regulate the neutron absorption rate. As mentioned before, the installment of the connector grid plate 182 enables power and electrical connections to be provided to the drive motor 111 and the instrumentation, enables the electromagnet 119 to be energized and allows the instrumentation to transmit and receive signals.

A person skilled in the art may foresee several variants of the above described embodiment.

For example, another embodiment comprises the reloading machine having prongs that reach into the reloading machine openings 121. The reloading machine may make the attachment to the frame 130 via a known mechanism for grasping frames. According to an embodiment, the reloading may have prongs that reach into the reloading machine openings 121 and subsequently each prong will translate outward to grasp onto the frame 130. The prongs may reach under a lip located on the frame 130 that when the loading machine is lifted the prongs are lifting the frame 130 via the lip. According to an embodiment, the drive assembly 110 may not have a reloading machine opening 121, and the reloading machine may reach around to an outer side surface of the frame 130 in order to attach to and lift the frame 130. According to another embodiment, the reloading machine may make an attachment with the frame 130 via a snap fit.

The operations performed during the third transportation state may be similar or the same as the reverse order of operations performed during the first transportations state.

The drive motor frame may have the first frame attachment 116 and thus a drive flange 120 may not be necessary to make an attachment between the drive assembly 110 and the frame 130.

The linear translator 117 may be a lead screw, the drive motor 111 joined with the linear translator 117 may make up a linear actuator or another device for translating linearly known *per se.* The linear translator 117 may have a threaded section. The drive motor 111 may be a brushless DC motor, such as a step motor. The drive unit may include a reduction gear to increase the torque.

The first frame attachment 116 may be a hole and the first frame attachment counterpart 135 may be a pin so that the frame 130 and the drive assembly 110 may be attached to one another, but also allow them to separate. The attachment between the first frame attachment 116 and the first frame attachment counterpart 135 may also be in the form of a temporary attachment known for attaching two parts. This attachment may be rigidly attached temporarily or may be where a surface of the drive flange 120 rests on a surface of the frame 130. This attachment may be made by a fastener which is unfastened before the second transportation state to allow the drive assembly 110 to be transported when the frame 130 is transported and to allow the drive assembly 110 to detach from the frame 130 during the second transportation state.

The instrumentation electrical connector 133 connects to the instrumentation electrical connector counterpart, in which the instrumentation electrical connector counterpart is located in the drive motor and instrumentation electrical connector counterpart 187. The drive assembly 110 may have the instrumentation opening 115 to allow these connections to meet, or may have more connectors and connector counterparts to provide electrical connections without the use of an opening. The instrumentation may comprise a plurality of sensors.

The cross section of the fuel unit 150 may have four sides or may be hexagonal or other known shapes for fuel units. Thus, the frame 130 and other components, for example the drive flange 120, may have an outer surface shape, such as a hexagonal shape, which may conform to the shape of the fuel unit 150.

The frame 130 lower section may be at a bottommost surface of the frame 130 or above the bottommost surface of the frame 130.

The subcomponents of the frame 130 may be manufactured as one solid component. The profile 131 may have a profile as illustrated in FIGURE 5 or may be a plate having enough structural integrity to prevent the frame 130 from falling to one side, or brake, and be able to transport the fuel and control system 100 without the profile 131 or frame from fracturing significantly.

The fuel and control system 100 may be powered by the connector grid plate 182, wires, or by other known methods.

The fuel unit upper section and the frame lower section 136 may be attached by a weld, fasteners, or other attachments known *per se* for attaching metal parts. The attachment between the fuel unit upper section and frame lower section 136 may be temporary where the attachment is secured during the normal operation of the nuclear reactor 170, the first transportation state, and the second transportation state and where the attachment can be detached and thus the frame can be reused and the fuel unit 150 taken to waste management.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention, which is defined by the claims.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", i.e. a singular form, throughout this document does not exclude a plurality.

### REFERENCE SIGNS LIST

| NO. | FEATURE | NO. | FEATURE |
|---|---|---|---|
| 100 | fuel and control system | 140 | control rod assembly |
| 110 | drive assembly | 141 | shaft |
| 111 | drive motor | 142 | plate |
| 112 | drive motor frame | 143 | support |
| 113 | linear translator opening | 144 | control rod |
| 114 | drive motor electrical connector | 150 | fuel unit |
| 115 | instrumentation opening | 151 | first fuel unit |
| 116 | first frame attachment | 152 | second fuel unit |
| 117 | linear translator | 170 | nuclear reactor |
| 118 | shaft opening | 171 | pressure vessel |
| 119 | electromagnet | 172 | reactor core |
| 120 | drive flange | 173 | lid |
| 121 | reloading machine opening | 174 | radial reflector |
| 130 | frame | 175 | radial reflector upper surface |
| 131 | profile | 181 | support grid plate |
| 132 | instrumentation guide | 182 | connector grid plate |
| 133 | instrumentation electrical connector | 183 | electric cable |
| 134 | frame upper section | 184 | main electrical connector |
| 135 | first frame attachment counterpart | 185 | main electrical connector counterpart |
| 136 | frame lower section | 186 | connector block |
| 137 | control rod opening | 187 | drive motor and instrumentation electrical connector counterpart |
| 138 | mesh | 188 | connector grid plate opening |

## Claims

1. A fuel and control system (100) for a nuclear reactor (170), comprising:
- a control rod assembly (140),
- a drive assembly (110), which is attached to the control rod assembly (140) for reactivity control, and
- a fuel unit (150),
**characterized by** a frame (130), which attaches the drive assembly (110) to the fuel unit (150) and provides a space for reactivity control movement of the control rod assembly (140) so that the frame (130), the fuel unit (150), the drive assembly (110) and the control rod assembly (140) are integrated as one unit, and so that the fuel and control system (100) is configured to be loaded into and unloaded out of the nuclear reactor (170) as one unit.

2. The fuel and control system (100) according to claim 1, wherein the frame (130) comprises a first frame attachment counterpart (135) configured to provide a first attachment between the drive assembly (110) and the frame (130), and wherein the frame (130) comprises a frame lower section (136) configured to provide a second attachment between the frame (130) and the fuel unit (150) so that the fuel and control system (100) is configured to move as one unit.

3. The fuel and control system (100) according to claim 2, wherein the frame (130) comprises a frame upper section (134) wherein:
- the frame (130) comprises a frame height which spans between the frame upper section (134) and the frame lower section (136),
- the frame height is equal to or greater than the height of the fuel unit (150), and
- the frame height is configured to allow the control rod assembly (140) to travel a travel distance.

4. The fuel and control system (100) according to any one of the preceding claims, wherein the control rod assembly (140) is configured to be lifted by the fuel unit (150) when the frame (130) is lifted.

5. The fuel and control system (100) according to any one of the preceding claims, wherein the drive assembly (110) and the control rod assembly (140) are configured to detach as one unit from the frame (130).

6. The fuel and control system (100) according to any one of the preceding claims, wherein the fuel and control system (100) comprises a contact point wherein the contact point is configured to come into contact with a reloading machine and wherein the reloading machine lifts the fuel and control system (100) at the contact point.

7. The fuel and control system (100) according to claim 6, wherein the contact point is on the frame (130).

8. The fuel and control system (100) according to any one of the preceding claims, wherein the fuel and control system (100) further comprises an instrumentation and an instrumentation guide (132) for housing a plurality of instrumentation wiring for the instrumentation, wherein the instrumentation guide (132) is incorporated into the frame (130).

9. The fuel and control system (100) according to claim 8, wherein the fuel and control system (100) further comprises a drive motor electrical connector (114) and an instrumentation electrical connector (133), wherein:
- the drive motor electrical connector (114) is configured to provide power to a drive motor (111), and
- the instrumentation electrical connector (133) is configured to provide electrical connections to the instrumentation, and allow signals to be transmitted from the instrumentation.

10. The fuel and control system (100) according to claim 9, wherein the instrumentation electrical connector (133) is located at a first instrumentation guide end.

11. A nuclear reactor (170) comprising.
- a reactor core (172),
- a pressure vessel (171) and
- a plurality of fuel and control systems (100) according to any one of the preceding claims, wherein the fuel and control system (100) is contained in the pressure vessel (171).

12. The nuclear reactor (170) of claim 11, wherein the nuclear reactor (170) further comprises a connector grid plate (182) configured to provide power and electrical connections to the plurality of fuel and control systems (100).

13. The nuclear reactor (170) of claim 12, wherein the connector grid plate (182) is configured to:
- prevent the removal of the fuel and control system (100) while the connector grid plate (182) is in a connected state,
- provide electrical power connections to the drive motor (111) while the connector grid plate (182) is in the connected state, and
- disconnect power connections from the drive motor (111) while the connector grid plate (182) is in a disconnected state.

14. The nuclear reactor (170) according to claim 13, wherein the connector grid plate (182) is configured to provide power and electrical connections to the instrumentation while the connector grid plate (182) is in the connected state, and disconnect electrical connections from the instrumentation while the connector grid plate (182) is in the disconnected state.

15. The nuclear reactor (170) according to any one of the preceding claims 13-14, wherein the connector grid plate (182) further comprises:
- a plurality of drive motor and instrumentation electrical connector counterparts (187) configured to connect to and disconnect from the drive motor electrical connectors (114) and the instrumentation electrical connectors (133) according to any one the preceding claims 9-10 of each fuel and control system (100) in the nuclear reactor (170), and
- a main electrical connector (184) configured to connect to a power source,
wherein there is no electrical connection, while the connector grid plate (182) is in the disconnected state, between the power source and the drive motor electrical connector (114), and between the power source and the instrumentation electrical connector (133).

16. A method for refueling a nuclear reactor (170) according to any one of the preceding claims 11 - 15, comprising:
- unloading a first fuel unit (151) by removing a fuel and control system (100) according to any one of the preceding claims 1 to 10 as one unit from the reactor core (172), and
- reloading a second fuel unit (152) by inserting a fuel and control system (100) as one unit into the reactor core (172).

17. The method of claim 16, further comprising reusing the drive assembly (110) and the control rod assembly (140) of the first fuel unit (151) in the second fuel unit (152) by removing the drive assembly (110) and control rod assembly (140) as one unit from the first fuel unit (151) after said unloading.

18. The method of any of the preceding claims 16 - 17 for refueling the nuclear reactor (170) according to any one of the preceding claims 12 - 15, further comprising removing the connector grid plate (182) before said unloading wherein the main electrical connector (184) is disconnected from a main electrical connector counterpart (185) causing zero electrical power to be provided to the drive assembly (110).

19. The method of claim 18, wherein the disconnection of the main electrical connector (184) from the main electrical connector counterpart (185) causes zero electrical power to be provided to the instrumentation.

20. The method of claim 19, wherein the zero electrical power provided to the drive assembly (110) prevents a plurality control rods (144) of the control rod assembly (140) from being withdrawn from a lowered position, which prevents the nuclear reactor (170) from becoming critical during the unloading of the first fuel unit (151) and during the loading of the second fuel unit (152).

21. The method of any of the preceding claims 16 - 20, further comprising replenishing one fuel unit (150) of the plurality of fuel units (150) at a time.

22. A method of operating a nuclear reactor (170) according to any one of the preceding claims 11 to 15, wherein the reactor core (172) is subject to a boron free operation.

## Patentansprüche

1. Brennstoff- und Steuerungssystem (100) für einen Kernreaktor (170), umfassend:
- eine Steuerungsstabanordnung (140),
- eine Antriebsanordnung (110), die zur Reaktivitätssteuerung an der Steuerungsstabanordnung (140) befestigt ist, und
- eine Brennstoffeinheit (150),
**gekennzeichnet durch** einen Rahmen (130), der die Antriebsanordnung (110) an der Brennstoffeinheit (150) befestigt und einen Raum für die Reaktivitätssteuerungsbewegung der Steuerungsstabanordnung (140) bereitstellt, sodass der Rahmen (130), die Brennstoffeinheit (150), die Antriebsanordnung (110) und die Steuerungsstabanordnung (140) als eine Einheit integriert sind, und sodass das Brennstoff- und Steuerungssystem (100) dazu konfiguriert ist, als eine Einheit in den Kernreaktor (170) geladen und daraus entladen zu werden.

2. Brennstoff- und Steuerungssystem (100) nach Anspruch 1, wobei der Rahmen (130) ein erstes Rahmenbefestigungsgegenstück (135) umfasst, das dazu konfiguriert ist, eine erste Befestigung zwischen der Antriebsanordnung (110) und dem Rahmen (130) bereitzustellen, und wobei der Rahmen (130) einen unteren Rahmenabschnitt (136) umfasst, der dazu konfiguriert ist, eine zweite Befestigung zwischen dem Rahmen (130) und der Brennstoffeinheit (150) bereitzustellen, sodass das Brennstoff- und Steuerungssystem (100) dazu konfiguriert ist, sich als eine Einheit zu bewegen.

3. Brennstoff- und Steuerungssystem (100) nach Anspruch 2, wobei der Rahmen (130) einen oberen Rahmenabschnitt (134) umfasst, wobei:
- der Rahmen (130) eine Rahmenhöhe umfasst, die sich zwischen dem oberen Rahmenabschnitt (134) und dem unteren Rahmenabschnitt (136) spannt,
- die Rahmenhöhe gleich oder größer als die Höhe der Brennstoffeinheit (150) ist, und
- die Rahmenhöhe dazu konfiguriert ist, der Steuerungsstabanordnung (140) zu ermöglichen, eine bestimmte Wegstrecke zurückzulegen.

4. Brennstoff- und Steuerungssystem (100) nach einem der vorstehenden Ansprüche, wobei die Steuerungsstabanordnung (140) dazu konfiguriert ist, von der Brennstoffeinheit (150) angehoben zu werden, wenn der Rahmen (130) angehoben wird.

5. Brennstoff- und Steuerungssystem (100) nach einem der vorstehenden Ansprüche, wobei die Antriebsanordnung (110) und die Steuerungsstabanordnung (140) dazu konfiguriert sind, sich als eine Einheit von dem Rahmen (130) zu lösen.

6. Brennstoff- und Steuerungssystem (100) nach einem der vorstehenden Ansprüche, wobei das Brennstoff- und Steuerungssystem (100) einen Kontaktpunkt umfasst, wobei der Kontaktpunkt dazu konfiguriert ist, mit einer Nachlademaschine in Kontakt zu kommen, und wobei die Nachlademaschine das Brennstoff- und Steuerungssystem (100) an dem Kontaktpunkt anhebt.

7. Brennstoff- und Steuerungssystem (100) nach Anspruch 6, wobei sich der Kontaktpunkt an dem Rahmen (130) befindet.

8. Brennstoff- und Steuerungssystem (100) nach einem der vorstehenden Ansprüche, wobei das Brennstoff- und Steuerungssystem (100) weiter eine Instrumentierung und eine Instrumentierungsführung (132) zum Unterbringen einer Vielzahl von Instrumentierungsverdrahtungen für die Instrumentierung umfasst, wobei die Instrumentierungsführung (132) in den Rahmen (130) integriert ist.

9. Brennstoff- und Steuerungssystem (100) nach Anspruch 8, wobei das Brennstoff- und Steuerungssystem (100) weiter einen elektrischen Antriebsmotorverbinder (114) und einen elektrischen Instrumentierungsverbinder (133) umfasst, wobei:
- der elektrische Antriebsmotorverbinder (114) dazu konfiguriert ist, einem Antriebsmotor (111) Leistung bereitzustellen, und
- der elektrische Instrumentierungsverbinder (133) dazu konfiguriert ist, der Instrumentierung elektrische Verbindungen bereitzustellen, und Signalen zu ermöglichen, von der Instrumentierung übertragen zu werden.

10. Brennstoff- und Steuerungssystem (100) nach Anspruch 9, wobei sich der elektrische Instrumentierungsverbinder (133) an einem ersten Instrumentenführungsende befindet.

11. Kernreaktor (170), umfassend
- einen Reaktorkern (172),
- ein Druckgefäß (171) und
- eine Vielzahl von Brennstoff- und Steuerungssystemen (100) nach einem der vorstehenden Ansprüche, wobei das Brennstoff- und Steuerungssystem (100) in dem Druckgefäß (171) enthalten ist.

12. Kernreaktor (170) nach Anspruch 11, wobei der Kernreaktor (170) weiter eine Verbindergitterplatte (182) umfasst, die dazu konfiguriert ist, Leistung und elektrische Verbindungen zu der Vielzahl von Brennstoff- und Steuerungssystemen (100) bereitzustellen.

13. Kernreaktor (170) nach Anspruch 12, wobei die Verbindergitterplatte (182) dazu konfiguriert ist:
- die Entfernung des Brennstoff- und Steuerungssystems (100) zu verhindern, während sich die Verbindergitterplatte (182) in einem verbundenen Zustand befindet,
- elektrische Leistungsverbindungen zu dem Antriebsmotor (111) bereitzustellen, während sich die Verbindergitterplatte (182) in dem verbundenen Zustand befindet, und
- Leistungsverbindungen von dem Antriebsmotor (111) zu trennen, während sich die Verbindergitterplatte (182) in einem getrennten Zustand befindet.

14. Kernreaktor (170) nach Anspruch 13, wobei die Verbindergitterplatte (182) dazu konfiguriert ist, Strom- und elektrische Verbindungen zu der Instrumentierung bereitzustellen, während sich die Verbindergitterplatte (182) in dem verbundenen Zustand befindet, und elektrische Verbindungen von der Instrumentierung zu trennen, während sich die Verbindergitterplatte (182) in dem getrennten Zustand befindet.

15. Kernreaktor (170) nach einem der vorstehenden Ansprüche 13-14, wobei die Verbindergitterplatte (182) weiter umfasst:
- eine Vielzahl von elektrischen Antriebsmotorverbinder- und Instrumentierungsverbindergegenstücken (187), die dazu konfiguriert sind, die elektrischen Antriebsmotorverbinder (114) und die elektrischen Instrumentierungsverbinder (133) nach einem der vorstehenden Ansprüche 9-10 eines jeden Brennstoff- und Steuerungssystems (100) in dem Kernreaktor (170) zu verbinden und zu trennen, und
- einen elektrischen Hauptverbinder (184), der dazu konfiguriert ist, sich mit einer Leistungsquelle, wobei keine elektrische Verbindung besteht, während sich die Verbindergitterplatte (182) in dem getrennten Zustand befindet, zwischen der Leistungsquelle und dem elektrischen Antriebsmotorverbinders (114) und zwischen der Leistungsquelle und dem elektrischen Instrumentierungsverbinder (133) zu verbinden.

16. Verfahren zum Auftanken eines Kernreaktors (170) nach einem der vorstehenden Ansprüche 11-15, umfassend:
- Entladen einer ersten Brennstoffeinheit (151) durch Entfernen eines Brennstoff- und Steuerungssystems (100) nach einem der vorstehenden Ansprüche 1 bis 10 als eine Einheit aus dem Reaktorkern (172), und
- Nachladen einer zweiten Brennstoffeinheit (152) durch Einsetzen eines Brennstoff- und Steuerungssystems (100) als eine Einheit in den Reaktorkern (172).

17. Verfahren nach Anspruch 16, weiter Wiederverwenden der Antriebsanordnung (110) und der Steuerungsstabanordnung (140) der ersten Brennstoffeinheit (151) in der zweiten Brennstoffeinheit (152) durch Entfernen der Antriebsanordnung (110) und der Steuerungsstabanordnung (140) als eine Einheit aus der ersten Brennstoffeinheit (151) nach dem Entladen umfassend.

18. Verfahren nach einem der vorstehenden Ansprüche 16-17 zum Auftanken des Kernreaktors (170 ) nach einem der vorstehenden Ansprüche 12-15, weiter Entfernen der Verbindergitterplatte (182) vor dem Entladen umfassend, wobei der elektrische Hauptverbinder (184) von einem Gegenstück (185) des elektrischen Hauptverbinders getrennt wird, wodurch eine elektrische Null-Leistung bewirkt wird, die der Antriebsanordnung (110) bereitzustellen ist.

19. Verfahren nach Anspruch 18, wobei das Trennen des elektrischen Hauptverbinders (184) von dem elektrischen Hauptverbindergegenstück (185) eine elektrische Null-Leistung bewirkt, die der Instrumentierung bereitzustellen ist.

20. Verfahren nach Anspruch 19, wobei die elektrische Null-Leistung, die der Antriebsanordnung (110) bereitgestellt wird, verhindert, dass eine Vielzahl von Steuerungsstäben (144) der Steuerungsstabanordnung (140) aus einer abgesenkten Position entzogen werden, wodurch verhindert wird, dass der Kernreaktor (170) beim Entladen der ersten Brennstoffeinheit (151) und beim Laden der zweiten Brennstoffeinheit (152) kritisch wird.

21. Verfahren nach einem der vorstehenden Ansprüche 16-20, weiter Nachfüllen jeweils einer Brennstoffeinheit (150) der Vielzahl von Brennstoffeinheiten (150) auf einmal umfassend.

22. Verfahren zum Betreiben eines Kernreaktors (170) nach einem der vorstehenden Ansprüche 11 bis 15, wobei der Reaktorkern (172) einem borfreien Betrieb unterzogen wird.

## Revendications

1. Système de combustible et de commande (100) pour un réacteur nucléaire (170), comprenant :
- un ensemble de barres de commande (140),
- un ensemble d'entraînement (110), qui est fixé à l'ensemble de barres de commande (140) pour la commande de réactivité, et
- une unité de combustible (150),
**caractérisé par** un cadre (130), qui fixe l'ensemble d'entraînement (110) à l'unité de combustible (150) et fournit un espace pour un déplacement de commande de réactivité de l'ensemble de barres de commande (140) de sorte que le cadre (130), l'unité de combustible (150), l'ensemble d'entraînement (110) et l'ensemble de barres de commande (140) soient intégrés en une seule unité, et de sorte que le système de combustible et de commande (100) soit configuré pour être chargé dans et déchargé du réacteur nucléaire (170) en une seule unité.

2. Système de combustible et de commande (100) selon la revendication 1, dans lequel le cadre (130) comprend une première contrepartie de fixation de cadre (135) configurée pour fournir une première fixation entre l'ensemble d'entraînement (110) et le cadre (130), et dans lequel le cadre (130) comprend une section inférieure de cadre (136) configurée pour fournir une seconde fixation entre le cadre (130) et l'unité de combustible (150) de sorte que le système de combustible et de commande (100) soit configuré pour se déplacer en une seule unité.

3. Système de combustible et de commande (100) selon la revendication 2, dans lequel le cadre (130) comprend une section supérieure de cadre (134), dans lequel :
- le cadre (130) comprend une hauteur de cadre qui s'étend entre la section supérieure de cadre (134) et la section inférieure de cadre (136),
- la hauteur de cadre est supérieure ou égale à la hauteur de l'unité de combustible (150), et
- la hauteur de cadre est configurée pour permettre à l'ensemble de barres de commande (140) de parcourir une distance de déplacement.

4. Système de combustible et de commande (100) selon l'une quelconque des revendications précédentes, dans lequel l'ensemble de barres de commande (140) est configuré pour être soulevé par l'unité de combustible (150) lorsque le cadre (130) est soulevé.

5. Système de combustible et de commande (100) selon l'une quelconque des revendications précédentes, dans lequel l'ensemble d'entraînement (110) et l'ensemble de barres de commande (140) sont configurés pour se détacher en une seule unité du cadre (130).

6. Système de combustible et de commande (100) selon l'une quelconque des revendications précédentes, dans lequel le système de combustible et de commande (100) comprend un point de contact, dans lequel le point de contact est configuré pour entrer en contact avec une machine de rechargement et dans lequel la machine de rechargement soulève le système de combustible et de commande (100) au niveau du point de contact.

7. Système de combustible et de commande (100) selon la revendication 6, dans lequel le point de contact est sur le cadre (130).

8. Système de combustible et de commande (100) selon l'une quelconque des revendications précédentes, dans lequel le système de combustible et de commande (100) comprend en outre une instrumentation et un guide d'instrumentation (132) pour loger une pluralité de câblages d'instrumentation pour l'instrumentation, dans lequel le guide d'instrumentation (132) est incorporé dans le cadre (130).

9. Système de combustible et de commande (100) selon la revendication 8, dans lequel le système de combustible et de commande (100) comprend en outre un connecteur électrique de moteur d'entraînement (114) et un connecteur électrique d'instrumentation (133), dans lequel :
- le connecteur électrique de moteur d'entraînement (114) est configuré pour alimenter un moteur d'entraînement (111), et
- le connecteur électrique d'instrumentation (133) est configuré pour fournir des connexions électriques à l'instrumentation et permettre la transmission de signaux à partir de l'instrumentation.

10. Système de combustible et de commande (100) selon la revendication 9, dans lequel le connecteur électrique d'instrumentation (133) est situé à une première extrémité de guide d'instrumentation.

11. Réacteur nucléaire (170) comprenant,
- un cœur de réacteur (172),
- une cuve sous pression (171) et
- une pluralité de systèmes de combustible et de commande (100) selon l'une quelconque des revendications précédentes, dans lequel le système de combustible et de commande (100) est contenu dans la cuve sous pression (171).

12. Réacteur nucléaire (170) selon la revendication 11, dans lequel le réacteur nucléaire (170) comprend en outre une plaque de grille de connecteur (182) configurée pour fournir de l'énergie et des connexions électriques à la pluralité de systèmes de combustible et de commande (100).

13. Réacteur nucléaire (170) selon la revendication 12, dans lequel la plaque de grille de connecteur (182) est configurée pour :
- empêcher le retrait du système de combustible et de commande (100) pendant que la plaque de grille de connecteur (182) est dans un état connecté,
- fournir des connexions d'alimentation électrique au moteur d'entraînement (111) pendant que la plaque de grille de connecteur (182) est dans l'état connecté, et
- déconnecter les connexions d'alimentation du moteur d'entraînement (111) pendant que la plaque de grille de connecteur (182) est dans un état déconnecté.

14. Réacteur nucléaire (170) selon la revendication 13, dans lequel la plaque de grille de connecteur (182) est configurée pour fournir de l'énergie et des connexions électriques à l'instrumentation pendant que la plaque de grille de connecteur (182) est dans l'état connecté, et déconnecter les connexions électriques de l'instrumentation pendant que la plaque de grille de connecteur (182) est dans l'état déconnecté.

15. Réacteur nucléaire (170) selon l'une quelconque des revendications 13-14 précédentes, dans lequel la plaque de grille de connecteur (182) comprend en outre :
- une pluralité de connecteurs électriques homologues de moteur d'entraînement et d'instrumentation (187) configurés pour se connecter et se déconnecter des connecteurs électriques de moteur d'entraînement (114) et des connecteurs électriques d'instrumentation (133) selon l'une quelconque des revendications 9-10 précédentes de chaque système de combustible et de commande (100) du réacteur nucléaire (170), et
- un connecteur électrique principal (184) configuré pour se connecter à une source d'énergie, dans lequel il n'y a pas de connexion électrique, pendant que la plaque de grille de connecteur (182) est dans l'état déconnecté, entre la source d'énergie et le connecteur électrique de moteur d'entraînement (114), et entre la source d'énergie et le connecteur électrique d'instrumentation (133).

16. Procédé de ravitaillement en combustible d'un réacteur nucléaire (170) selon l'une quelconque des revendications 11-15 précédentes, comprenant :
- le déchargement d'une première unité de combustible (151) en retirant un système de combustible et de commande (100) selon l'une quelconque des revendications 1 à 10 précédentes en une seule unité du cœur de réacteur (172), et
- le rechargement d'une seconde unité de combustible (152) en insérant un système de combustible et de commande (100) en une seule unité dans le cœur de réacteur (172).

17. Procédé selon la revendication 16, comprenant en outre la réutilisation de l'ensemble d'entraînement (110) et de l'ensemble de barres de commande (140) de la première unité de combustible (151) dans la seconde unité de combustible (152) en retirant l'ensemble d'entraînement (110) et l'ensemble de barres de commande (140) en une seule unité de la première unité de combustible (151) après ledit déchargement.

18. Procédé selon l'une quelconque des revendications 16-17 précédentes de ravitaillement en combustible du réacteur nucléaire (170) selon l'une quelconque des revendications 12-15 précédentes, comprenant en outre le retrait de la plaque de grille de connecteur (182) avant ledit déchargement, dans lequel le connecteur électrique principal (184) est déconnecté d'un connecteur électrique principal homologue (185), ce qui provoque la fourniture d'une puissance électrique nulle à l'ensemble d'entraînement (110).

19. Procédé selon la revendication 18, dans lequel la déconnexion du connecteur électrique principal (184) du connecteur électrique principal homologue (185) provoque la fourniture d'une puissance électrique nulle à l'instrumentation.

20. Procédé selon la revendication 19, dans lequel la puissance électrique nulle fournie à l'ensemble d'entraînement (110) empêche une pluralité de barres de commande (144) de l'ensemble de barres de commande (140) d'être retirées d'une position abaissée, ce qui empêche le réacteur nucléaire (170) de devenir critique pendant le déchargement de la première unité de combustible (151) et pendant le chargement de la seconde unité de combustible (152).

21. Procédé selon l'une quelconque des revendications 16-20 précédentes, comprenant en outre le ravitaillement d'une unité de combustible (150) de la pluralité d'unités de combustible (150) à la fois.

22. Procédé de fonctionnement d'un réacteur nucléaire (170) selon l'une quelconque des revendications 11-15 précédentes, dans lequel le cœur de réacteur (172) est soumis à un fonctionnement sans bore.
